# EUROPÄISCHE PATENTSCHRIFT

(11) **EP 0 650 814 B1**
(45) Veröffentlichungstag und Bekanntmachung des Hinweises auf die Patenterteilung: **07.01.1999**
(21) Anmeldenummer: 94116208.3
(22) Anmeldetag: 14.10.1994
(51) Int. Cl.: B29B 17/02, B03B 9/06, B03B 11/00, B03B 5/34, B04C 5/04

(54) **Eintragvorrichtung für vorbehandelte Kunststofffraktionen, insbesondere Kunststoffschnitzel, in eine Trenn- und Wascheinrichtung**
Device for pretreated plastic fractions, specially scrap portions, in a separation and cleaning apparatus
Dispositif pour fractions prétraitées en matière plastique, spécialement de déchets coupés installé en un appareil pour la séparation et le lavage des déchets

(30) Priorität: 30.10.1993 DE 4337207
(43) Veröffentlichungstag der Anmeldung: 03.05.1995
(73) Patentinhaber: R+T UMWELT GmbH, D-04299 Leipzig (DE)
(72) Erfinder: Wünsch, Edgar, D-14712 Rathenow (DE); Haliczinovski, Rainer, D-98553 Hinternah (DE); Pickert, Bernd, D-14715 Göttlin (DE)
(74) Vertreter: Spalthoff, Adolf, Dipl.-Ing.

(56) Entgegenhaltungen:
- DE-A- 2 539 960
- DE-A- 2 900 666
- DE-A- 4 233 372
- PATENT ABSTRACTS OF JAPAN vol. 5, no. 72 (M-68) (744) 14. Mai 1981 & JP-A-56 024 121 (HITACHI ZOSEN K.K.) 7. März 1981
- CHEMIE- ANLAGEN + VERFAHREN, Nr.8, August 1984, LEINFELDEN-ECHTERDINGEN DE Seiten 17 - 22 DR.-ING. GUIDO ROPERTZ 'NASSMECHANISCHE AUFBEREITUNG VON KUNSTSTOFFABFÄLLEN' & EP-A-0 304 667 (AKW APPARATE UND VERFAHREN GMBH)

## Beschreibung

Die Erfindung bezieht sich auf eine Eintragvorrichtung für vorbehandelte Kunststofffraktionen, insbesondere Kunststoffschnitzel, in eine Trenn- und Wascheinrichtung mit einem Flüssigkeitsbad, in dem Kunststoffe mit einer Dichte größer 1g/cm3 und/oder Schmutz-, Papier- und andere an den Kunststoffschnitzeln anhaftende Partikel von den Kunststoffschnitzeln abgetrennt werden.

Derartige Trenn- und Wascheinrichtungen für Kunststoffschnitzel sind Bestandteile von großen Anlagen für das Kunststoffrecycling. Beim Einbringen von zu Kunststoffschnitzeln zerkleinerten Kunststoffen in Flüssigkeiten, wie es bei derartigen Recyclinganlagen vergleichsweise häufig auftritt, entstehen Schwierigkeiten aufgrund einer unzureichenden Benetzung der zerkleinerten Kunststoffschnitzel. Insbesondere bei Kunststoffschnitzeln aus der Polyolefingruppe kommt es wegen deren geringer Dichte beim Eintragen in Flüssigkeiten, z.B. Wasser, zu einem sofortigen Aufschwimmen der Kunststoffschnitzel an die Flüssigkeitsoberfläche. Aufgrund der hieraus resultierenden ungenügenden Benetzung der Kunststoffschnitzel wird hinsichtlich der an den Kunststoffschnitzeln anhaftenden Schmutz-, Papier- und anderen Partikel nur eine geringe Abtrennwirkung erzielt.

Zur Verbesserung der Benetzung der Kunststoffschnitzel werden diese bei bekannten Trenn- und Wascheinrichtungen beim Erreichen des Flüssigkeitsspiegels des Flüssigkeitsbades wieder unter den Flüssigkeitsspiegel gedrückt. Hierfür sind horizontal gelagerte Wellen oder Walzen mit Rührelementen im Bereich des Flüssigkeitsspiegels des Flüssigkeitsbades angeordnet. Durch Drehung der auf diesen Wellen oder Walzen vorgesehenen Rührelemente sollen die Kunststoffschnitzel unter den Flüssigkeitsspiegel gedrückt werden, womit eine weitere Benetzung erreicht werden kann. Auch mit diesen Rührvorrichtungen wird jedoch nur eine vergleichsweise geringe Verweilzeit der Kunststoffschnitzel innerhalb des Flüssigkeitsbades erreicht. Die vorstehend erwähnte geringe Abtrennwirkung kann allenfalls maginal erhöht werden. Des weiteren haben die geschilderten Rührvorrichtungen insofern einen beträchtlichen Nachteil, als die Kunststoffschnitzel dazu neigen, sich um die Wellen bzw. Wellenlager oder Walzenlager zu wickeln, wobei dieser Effekt insbesondere dann auftritt, wenn unter den Kunststoffschnitzeln ungenügend zerkleinerte bandförmige Kunststoffolienteile enthalten sind. Die Umwicklung ihrer Wellen bzw. Wellen- und Walzenlager durch derartige Kunststoffolienteile führt letztendlich zum Versagen der Rührvorrichtungen.

Der Erfindung liegt die Aufgabe zugrunde, die gattungsgemäße Eintragvorrichtung derart weiterzubilden, daß eine ausreichend lange Verweilzeit für die Kunststoffschnitzel - auch für ungenügend zerkleinerte bandförmige Kunststoffolienteile - innerhalb des Flüssigkeitsbades ohne aufwendige Rührvorrichtungen erreichbar ist.

Diese Aufgabe wird erfindungsgemäß dadurch gelöst, daß die Eintragvorrichtung, mittels der die Kunststoffschnitzel in das Flüssigkeitsbad eingebracht werden, als Zyklon ausgebildet ist, der an seiner Eintrittfläche mit den Kunststoffschnitzeln beaufschlagbar und der in seinem Eingangsabschnitt an eine Flüssigkeitsleitung angeschlossen ist, mittels der ein Flüssigkeitsstrom tangential in den Eingangsabschnitt des Zyklons einleitbar ist. Bei der erfindungsgemäßen Ausgestaltung der Trenn- und Wascheinrichtung tritt ein Flüsigkeitsstrom mit hoher Geschwindigkeit tangential in den Eingangsabschnitt des Zyklons ein. Durch die obere Eintrittfläche des Zyklons werden die Kunststoffschnitzel eingetragen. Mittels des sich schon im Eingangsabschnitt des Zyklons ausbildenden Flüssigkeitswirbels werden die Kunststoffschnitzel bereits in der Eintragvorrichtung, d.h. im Zyklon, sehr intensiv mit Flüssigkeit vermischt. Der Austritt der Kunststoffschnitzel/Flüssigkeitsströmung aus dem Zyklon erfolgt unterhalb des Flüssigkeitsspiegels des Flüssigkeitsbades. Aufgrund der bereits in der Eintragvorrichtung stattfindenden sehr intensiven Benetzung der Kunststoffschnitzel wird eine vergleichsweise wirkungsvolle Abtrennung von an den Kunststoffschnitzeln anhaftenden Schmutz-, Papier- und anderen Partikeln erzielt.

Für die intensive Durchmischung von Kunststoffschnitzeln und Flüssigkeit besonders günstige Strömungsverhältnisse innerhalb des Zyklons sind erreichbar, wenn der Eingangsabschnitt des Zyklons zylindrisch ausgebildet ist und wenn sich der Zyklon stromab bzw. unterhalb seines zylindrischen Eingangsabschnitts in einem Trichterabschnitt konisch verjüngt.

Um den Eintritt der durchmischten Kunststoffschnitzel-/Flüssigkeitsströmung in das Flüssigkeitsbad möglichst weit nach unten zu verlagern, ist es vorteilhaft, wenn der Zyklon ausgangsseitig an ein Austragrohr angeschlossen ist, dessen zyklonfernes Ende unterhalb des Flüssigkeitsspiegels des Flüssigkeitsbades angeordnet ist.

Eine beträchtliche Ausdehnung der Verweilzeit der Kunststoffschnitzel innerhalb des Flüssigkeitsbades unterhalb des Flüssigkeitsspiegels ist erreichbar, wenn das Austragrohr als Rohrkrümmer ausgebildet ist, dessen Austrittfläche zum Flüssigkeitsspiegel des Flüssigkeitsbades so geneigt ist, daß die aus der Austrittfläche abgestrahlte Flüssigkeits-Kunststoffschnitzelströmung aus einer vergleichsweise großen, zum Flüssigkeitsspiegel des Flüssigkeitsbades parallelen Strömungskomponente und einer vergleichsweise kleinen, in bezug auf den Flüssigkeitsspiegel des Flüssigkeitsbades vertikal abwärts gerichteten Strömungskomponente zusammengesetzt ist. Durch die zum Flüssigkeitsspiegel des Flüssigkeitsbades parallele Strömungskomponente der Kunststoffschnitzelströmung wird erreicht, daß die Kunststoffschnitzel geringer Dichte nicht sofort aufschwemmen können.

Um zu gewährleisten, daß die Kunststoffschnitzel in Richtung eines Leichtgutaustrages des Flüssigkeitsbades transportiert werden, kann der Rohrkrümmer mit seiner Austrittfläche in Richtung auf den Leichtgutaustrag des Flüssigkeitsbades gerichtet sein.

Eine zusätzliche Verlängerung der Verweilzeit der Kunststoffschnitzel innerhalb des Flüssigkeitsbades unterhalb des Flüssigkeitsspiegels kann erzielt werden, wenn im Flüssigkeitsbad oberhalb der Austrittsfläche des Austragrohrs und unterhalb des Flüssigkeitsspiegels des Flüssigkeitsbades in einem geringen Winkel zum Flüssigkeitsspiegel des Flüssigkeitsbades eine Platte angeordnet ist, mittels der der Auftrieb der im Flüssigkeitsbad befindlichen Kunststoffschnitzel behindert werden kann.

Eine erhebliche Stabilisierung der Funktionsweise der Eintragvorrichtung wird erzielt, wenn im Rohrkrümmer in Richtung auf einen Leichtgutaustrag ein mit Wassereinspritzung arbeitender Injektor installiert ist.

Durch die Erfindung wird ein Verfahren zum Eintragen von Kunststoffschnitzeln in ein Flüssigkeitsbad einer Trenn- und Wascheinrichtung einer Kunststoffrecyclinganlage zur Verfügung gestellt, bei dem die Kunststoffschnitzel in Hauptachsrichtung eines Zyklons in diesen eingebracht, innerhalb des Zyklons mit einem in Tangentialrichtung des Zyklons in diesen abgestrahlten Flüssigkeitsstrom beaufschlagt und mit dem Flüssigkeitsstrom unter den Flüssigkeitsspiegel des Flüssigkeitsbades transportiert werden. Irgendwelche aufwendigen Maßnahmen, um an den Flüssigkeitsspiegel gelangte Kunststoffschnitzel in das Flüssigkeitsbad unter den Flüssigkeitsspiegel zurückzudrücken, können entfallen, da mit dem vorstehend geschilderten Verfahren eine ausreichend lange Verweilzeit der Kunststoffschnitzel innerhalb des Flüssigkeitsbades gewährleistet werden kann bzw. da bereits beim Eintragvorgang eine intensive Durchmischung der Kunststoffschnitzel mit dem sie beaufschlagenden, tangential in den Zyklon gerichteten und einen Flüssigkeitswirbel ausbildenden Flüsigkeitsstrom stattfindet.

Die Verweilzeit der Kunststoffschnitzel im Flüssigkeitsbad unterhalb des Flüssigkeitsspiegels läßt sich beträchtlich erhöhen, wenn die Flüssigkeits-/Kunststoffschnitzelströmung beim Austritt aus dem Zyklon bzw. einem am Zyklon angeschlossenen Austragrohr unter Ausbildung eines spitzen Winkels mit einer zum Flüssigkeitsspiegel des Flüssigkeitsbades parallelen Ebene schräg abwärts gerichtet wird.

Ein erleichterter Austrag der Kunststoffschnitzel aus dem Flüssigkeitsbad ist erreichbar, wenn die Flüssigskeits-/Kunststoffschnitzelströmung beim Austritt aus dem Zyklon bzw. dem am Zyklon angeschlossenen Ansaugrohr in Richtung auf einen Leichtgutaustrag des Flüssigkeitsbades abgestrahlt wird.

Eine weitere Erhöhung der Verweilzeit der Kunststoffschnitzel innerhalb des Flüssigkeitsbades unterhalb des Flüssigkeitsspiegels kann erzielt werden, wenn der Auftrieb der Kunststoffschnitzel innerhalb des Flüssigkeitsbades mittels einer in einem spitzen Winkel zum Flüssigkeitsspiegel des Flüssigkeitsbades zwischen dem Flüssigkeitsspiegel und dem Austritt aus dem Zyklon bzw. dem am Zyklon angeschlossenen Austragrohr angeordneten Platte behindert wird.

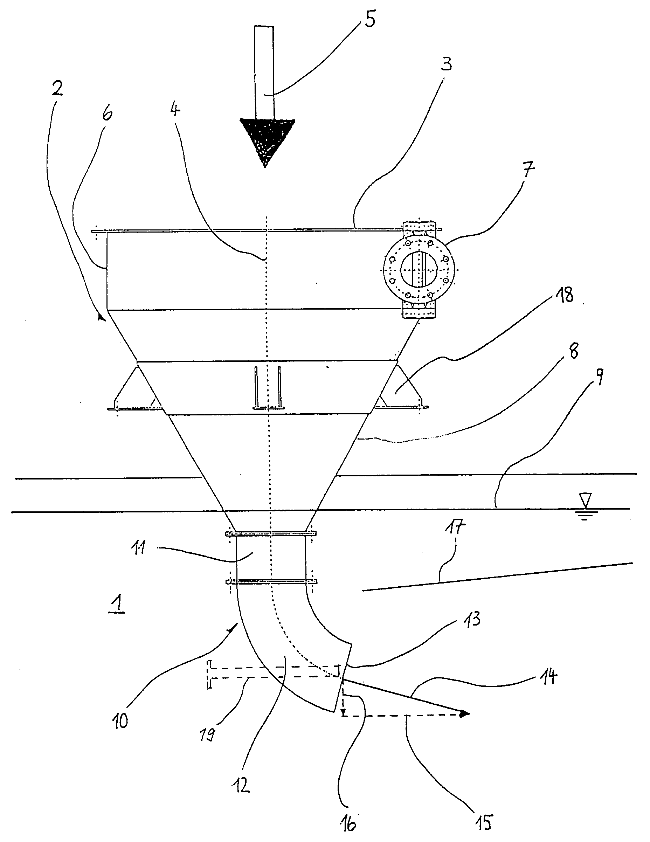

Im folgenden wird die Erfindung an Hand einer Ausführungsform unter Bezugnahme auf die Zeichnung näher erläutert, in der eine erfindungsgemäße Eintragvorrichtung für Kunststoffschnitzel hinsichtlich ihrer für die Erfindung wesentlichen Teile dargestellt ist.

Eine in der einzigen Figur dargestellte Trenn- und Wascheinrichtung für Kunststoffschnitzel hat ein Flüssigkeitsbad 1 und eine als Zyklon 2 ausgebildete Eintragvorrichtung. Weitere Bauteile der Trenn- und Wascheinrichtung, z.B. ein Leichtgutaustrag und eine Badwandung od.dgl., sind in der einzigen Figur nicht dargestellt, da sie für das Verständnis der Erfindung nicht erforderlich sind.

Der Zyklon 2 hat eine offene obere Eintrittfläche 3, durch die hindurch er in seiner Hauptachsrichtung 4 mit einem durch einen Pfeil 5 dargestellten Kunststoffschnitzelstrom beaufschlagbar ist.

Der Zyklon 2 hat einen in der einzigen Figur unterhalb der Eintrittfläche 3 angeordneten zylindrischen Eingangsabschnitt 6, der an einer - in der Figur an der rechten - Seite an eine Flüssigkeitsleitung 7 angeschlossen ist, mittels der ein Flüssigkeitsstrom, vorzugsweise ein Wasserstrom, mit grosser Strömungsgeschwindigkeit in den Eingangsabschnitt 6 des Zyklons 2 abgestrahlt werden kann. An den Eingangsabschnitt 6 des Zyklons 2 schließt sich ein sich konisch verjüngender Trichterabschnitt 8 an. Im dargestellten Ausführungsbeispiel ist das untere Ende des Trichterabschnitts 8 des Zyklons 3 unterhalb des Flüssigkeitsspiegels 9 des Flüssigkeitsbades 1 angeordnet und dort an ein Austragrohr 10 angeschlossen, das einen an das untere Ende des Trichterabschnitts 8 angeschlossenen geraden Rohrabschnitt 11 und einen an das untere Ende des geraden Rohrabschnitts 11 angeschlossenen Rohrkrümmer 12 aufweist. Die Austrittfläche 13 des Rohrkrümmers 12 des Austragrohrs 10 ist so angeordnet, daß die aus dem Rohrkrümmer 12 durch sie abgestrahlte Flüssigkeits-/Kunststoffschnitzelströmung 14 eine vergleichsweise große, zum Flüssigkeitsspiegel 9 des Flüssigkeitsbads 1 parallele Strömungskomponente 15 und eine vergleichsweise kleine, in bezug auf den Flüssigkeitsspiegel 9 des Flüssigkeitsbades 1 vertikal abwärts gerichtete Strömungskomponente aufweist.

Die zum Flüssigkeitsspiegel 9 des Flüssigkeitsbades 1 parallele, vergleichsweise große Strömungskomponente 15 der Flüssigkeits-/Kunststoffschnitzelströmung ist auf den in der Figur nicht dargestellten Leichtgutaustrag des Flüssigkeitsbades 1 gerichtet.

Unterhalb des Flüssigkeitsspiegels 9 des Flüssigkeitsbades 1 und oberhalb der Austrittfläche 13 des Rohrkrümmers 12 des Ansaugrohrs 10 ist im Flüssigkeitsbad 1 eine Platte 17 angeordnet, die mit einer zum Flüssigkeitsspiegel 9 des Flüssigkeitsbades 1 parallelen Ebene einen vergleichsweise spitzen Winkel einschließt.

Der Zyklon 2 ist mittels Lagern 18 fest oberhalb des Flüssigkeitsbads 1 angebracht.

Im folgenden wird die Funktionsweise der vorstehend geschilderten Trenn- und Wascheinrichtung für Kunststoffschnitzel beschrieben.

Der Kunststoffschnitzelstrom 5 wird durch die Eintrittfläche 3 des Zyklons 2 parallel zu dessen Hauptachsrichtung 4 in dessen Eingangsabschnitt 6 eingebracht. Dort werden die Kunststoffschnitzel mit dem aus der Flüssigkeitsleitung 7 in Tangentialrichtung in den Eingangsabschnitt 6 des Zyklons 2 eintretenden Wasserstrom beaufschlagt. Bereits im Eingangsabschnitt 6 des Zyklons 2, insbesondere aber in dessen sich konisch verjüngendem Trichterabschnitt 8, kommt es zur Ausgestaltung eines Wasserwirbels, in dem eine intensive Durchmischung des Wassers und der Kunststoffschnitzel stattfindet, in deren Verlauf die Kunststoffschnitzel in beträchtlichem Umfang benetzt werden. Aus dem Trichterabschnitt 8 des Zyklons 2 tritt das Gemisch aus Wasser und Kunststoffschnitzeln durch den geraden Rohrabschnitt 11 des Austragrohrs 10 in den Rohrkrümmer 12 des Austragrohrs 10 ein, welchen Rohrkrümmer 12 das genannte Gemisch durch die Austrittfläche 13 des Rohrkrümmers 12 als Flüssigkeits-/Kunststoffschnitzelströmung 14 verläßt. Die zum Flüssigkeitsspiegel 9 des Flüssigkeitsbades 1 parallele und vergleichsweise große Strömungskomponente 15 dieser Flüssigkeits-/Kunststoffschnitzelströmung ist auf den Leichtgutaustrag des Flüssigkeitsbades 1 gerichtet. Aufgrund der in bezug auf den Flüssigkeitsspiegel 9 des Flüssigkeitsbades 1 vertikal abwärts gerichteten Strömungskomponente 16 der Flüssigkeits-/Kunststoffschnitzelströmung ergibt sich eine nicht unbeträchtlich verlängerte Verweilzeit der Kunststoffschnitzel im Flüssigkeitsbad 1 unterhalb des Flüssigkeitsspiegels 9. Ein unerwünschter Auftrieb der Kunststoffschnitzel unmittelbar nach deren Austritt aus der Austrittfläche 13 des Rohrkrümmers 12 wird durch die Platte 17, die oberhalb der Austrittfläche 13 des Rohrkrümmers 12 und unterhalb des Flüssigkeitsspiegels 9 des Flüssigkeitsbades 1 angeordnet ist, verhindert.

Im Rohrkrümmer 12 kann ein in der Figur gestrichelt dargestellter Injektor 19 in Richtung auf den Leichtgutaustrag installiert sein, der mit Wassereinspritzung arbeitet. Hierdurch wird die Funktionsweise der Eintragvorrichtung erheblich stabilisiert.

## Patentansprüche

1. Eintragvorrichtung für vorbehandelte Kunststofffraktionen, insbesondere Kunststoffschnitzel, in eine Trenn- und Wascheinrichtung mit einem Flüssigkeitsbad (1), in dem Kunststoffe mit einer Dichte größer 1g/cm3 und/oder Schmutz-, Papier- und andere an den Kunststoffschnitzeln anhaftende Partikel von den Kunststoffschnitzeln abgetrennt werden, dadurch gekennzeichnet, daß die Eintragvorrichtung als Zyklon (2) ausgebildet ist, der an seiner Eintrittfläche (3) mit den Kunststoffschnitzeln beaufschlagbar und der in seinem Eingangsabschnitt (6) an eine Flüssigkeitsleitung (7) angeschlossen ist, mittels der ein Flüssigkeitsstrom tangential in den Eingangsabschnitt (6) des Zyklons (2) einleitbar ist.

2. Eintragvorrichtung nach Anspruch 1, bei der der Eingangsabschnitt (6) des Zyklons (2) zylindrisch ausgebildet ist und bei der sich der Zyklon (2) stromab seines zylindrischen Eingangsabschnitts (6) in einem Trichterabschnitt (8) konisch verjüngt.

3. Eintragvorrichtung nach Anspruch 1 oder 2, bei der der Zyklon (2) ausgangsseitig an ein Austragrohr (10) angeschlossen ist, dessen zyklonfernes Ende unterhalb des Flüssigkeitsspiegels (9) des Flüssigkeitsbades (1) angeordnet ist.

4. Eintragvorrichtung nach Anspruch 3, bei der das Austragrohr (10) einen Rohrkrümmer (12) aufweist, dessen Austrittfläche (13) zum Flüssigkeitsspiegel (9) des Flüssigkeitsbades (1) so geneigt ist, daß die aus der Austrittfläche (13) abgestrahlte Flüssigkeits-/Kunststoffschnitzelströmung (14) aus einer vergleichsweise großen, zum Flsüsigkeitsspiegel (9) des Flüssigkeitsbades (1) parallelen Strömungskomponente (15) und einer vergleichsweise kleinen, in bezug auf den Flüssigkeitsspiegel (9) des Flüssigkeitsbades (1) vertikal abwärts gerichteten Strömungskomponente (16) zusammengesetzt ist.

5. Eintragvorrichtung nach Anspruch 4, bei der der Rohrkrümmer (12) mit seiner Austrittfläche (13) in Richtung auf einen Leichtgutaustrag des Flüssigkeitsbades (1) gerichtet ist.

6. Eintragvorrichtung nach einem der Ansprüche 3 bis 5, bei der im Flüssigkeitsbad (1) oberhalb der Austrittfläche (13) des Austragrohrs (10) und unterhalb des Flüssigkeitsspiegels (9) des Flüssigkeitsbades (1) in einem geringen Winkel zum Flüssigkeitsspiegel (9) des Flüssigkeitsbades (1) eine Platte (17) angeordnet ist.

7. Eintragvorrichtung nach einem der Ansprüche 3 bis 5, bei der im Rohrkrümmer (12) in Richtung auf einen Leichtgutaustrag ein Injektor (19), der mit einer Wassereinspritzung arbeitet, installiert ist.

8. Verfahren zum Eintragen von Kunststoffschnitzeln in ein Flüssigkeitsbad (1) einer Trenn- und Wascheinrichtung einer Kunststoffrecyclinganlage, dadurch gekennzeichnet, daß die Kunststoffschnitzel (5) in Hauptachsrichtung (4) eines Zyklons (2) in diesen eingebracht, innerhalb des Zyklons (2) mit einem in Tangentialrichtung des Zyklons (2) in diesen abgestrahlten Flüssigkeitsstrom beaufschlagt und mit dem Flüssigkeitsstrom unter den Flüssigkeitsspiegel (9) des Flüssigkeitsbades (1) transportiert werden.

9. Verfahren nach Anspruch 8, bei dem die Flüssigskeits-/Kunststoffschnitzelströmung beim Austritt aus dem Zyklon (2) bzw. einem am Zyklon (2) angeschlossenen Austragrohr (10) unter Ausbildung eines spitzen Winkels mit einer zum Flüssigkeitsspiegel (9) des Flüssigkeitsbades (1) parallelen Ebene schräg abwärts gerichtet wird.

10. Verfahren nach Anspruch 8 oder 9, bei dem die Flüssigkeits-/Kunststoffschnitzelströmung (14) beim Austritt aus dem Zyklon (2) bzw. dem am Zyklon (2) angeschlossenen Austragrohr (10) in Richtung auf einen Leichtgutaustrag des Flüssigkeitsbades (1) abgestrahlt wird.

11. Verfahren nach einem der Ansprüche 8 bis 10, bei dem der Auftrieb der Kunststoffschnitzel innerhalb des Flüssigkeitsbades (1) mittels einer in einem spitzen Winkel zum Flüssigkeitsspiegel (9) des Flüssigkeitsbades (1) zwischen dem Flüssigkeitsspiegel (9) und dem Austritt aus dem Zyklon (2) bzw. dem am Zyklon (2) angeschlossenen Austragrohr (10) angeordneten Platte (17) behindert wird.

## Claims

1. Device for feeding pre-treated plastics fractions, particularly plastics chippings, into a separating and washing installation with a fluid bath (1) in which plastics with a density greater than 1g/cm3 and/or particles of dirt, paper and other particles adhering to the plastics chippings are separated off from the plastics chippings, characterised in that the feeding device is constructed as a cyclone (2) which can be supplied with the plastics chippings on its intake surface (3) and in which its inlet section (6) is connected to a fluid pipe (7) by means of which a stream of fluid can be introduced tangentially into the intake section (6) of the cyclone (2).

2. Feeding device as claimed in Claim 1, in which the intake section (6) of the cyclone (2) is of cylindrical construction and in which the cyclone (2) tapers conically in the form of a funnel section (8) downstream of its cylindrical intake section (6).

3. Feeding device as claimed in Claim 1 or 2, in which the cyclone (2) is connected at the outlet end (2) to a discharge pipe (10), of which the end which is remote from the cyclone is disposed below the fluid level (9) of the fluid bath (1).

4. Feeding device as claimed in Claim 3, in which the discharge pipe (10) has a pipe bend (12) the outlet (13) of which is so inclined with respect to the fluid level (9) of the fluid bath (1) that the stream of fluid/plastics chippings (14) radiated from the outlet (13) is composed of a comparatively large component (15) which is parallel to the fluid level (9) of the fluid bath (1) and a comparatively small component (16) which is directed vertically downwards with respect to the fluid level (9) of the fluid bath (1).

5. Feeding device as claimed in Claim 4, in which the pipe bend (12) is aligned with its outlet (13) in the direction of a light material outlet of the fluid bath (1).

6. Feeding device as claimed in one of Claims 3 to 5, in which a plate (17) is disposed in the fluid bath (1) above the outlet (13) of the discharge pipe (10) and below the fluid level (9) of the fluid bath (1) at a small angle with respect to the fluid level (9) of the fluid bath (1).

7. Feeding device as claimed in one of Claims 3 to 5, in which an injector (19) which works with water injection is installed in the pipe bend (12) in the direction of a light material outlet.

8. Method of feeding plastics chippings into a fluid bath (1) of a separating and washing installation of a plastics recycling plant, characterised in that the plastics chippings (5) are introduced into a cyclone (2) in the principal axial direction (4) of the latter, within the cyclone (2) they are supplied with a stream of fluid radiated into the cyclone (2) in the tangential direction of the cyclone, and are transported with the stream of fluid below the fluid level (9) of the fluid bath (1).

9. Method as claimed in Claim 8, in which as the stream of fluid/plastics chippings comes out of the cyclone (2) or a discharge pipe (10) connected to the cyclone (2) it is directed obliquely downwards, forming an acute angle with a plane parallel to the fluid level (9) of the fluid bath (1).

10. Method as claimed in Claim 8 or 9, in which as the stream of fluid/plastics chippings (14) comes out of the cyclone (2) or a discharge pipe (10) connected to the cyclone (2) it is radiated in the direction of a light material outlet of the fluid bath (1).

11. Method as claimed in one of Claims 8 to 10, in which the plastics chippings are prevented from rising within the fluid bath (1) by means of a plate (17) disposed at an acute angle to the fluid level (9) of the fluid bath (1) between the fluid level (9) and the outlet from the cyclone (2) or the discharge pipe (10) connected to the cyclone (2).

## Revendications

1. Dispositif de chargement pour des fragments de matières plastiques prétraités, en particulier pour des chips de matière plastique, dans un dispositif de séparation et de lavage comportant un bain de liquide (1), dans lequel les matières plastiques avec une densité supérieure à 1 g/cm³ et/ou les particules de saleté, de papier et autres qui adhèrent aux chips de matière plastique sont séparées des chips de matière plastique, caractérisé par le fait que le dispositif de chargement est réalisé sous la forme d'un cyclone (2) qui peut être alimenté en chips de matière plastique au niveau de son entrée (3) et qui, dans son tronçon d'entrée (6) est connecté à une conduite de liquide (7) à l'aide de laquelle un flux de liquide peut être introduit tangentiellement dans le tronçon d'entrée (6) du cyclone (2).

2. Dispositif de chargement selon la revendication 1, dans lequel le tronçon d'entrée (6) du cyclone (2) est cylindrique et dans lequel le cyclone (2), en aval de son tronçon d'entrée (6) cylindrique, se rétrécit en cône en formant un tronçon en entonnoir (8).

3. Dispositif de chargement selon la revendication 1 ou 2, dans lequel le cyclone (2) est connecté côté sortie à un tuyau d'évacuation (10), dont l'extrémité éloignée du cyclone est disposée en-dessous de la surface (9) du bain de liquide (1).

4. Dispositif de chargement selon la revendication 3, dans lequel le tube de décharge (10) comporte un coude (12) dont la surface de sortie (13) est inclinée par rapport à la surface (9) du bain de liquide (1) de telle sorte que l'écoulement de liquide/chips de matière plastique (14) émis par la surface de sortie (13) comprenne une composante d'écoulement (15) relativement grande parallèle à la surface (9) du bain de liquide (1) et une composante d'écoulement (16) relativement petite dirigée verticalement vers le bas par rapport à la surface (9) du bain de liquide (1).

5. Dispositif de chargement selon la revendication 4, dans lequel la surface de sortie (13) du coude (12) est orientée en direction d'une évacuation de produits légers du bain de liquide (1).

6. Dispositif de chargement selon une des revendications 3 à 5, dans lequel une plaque (17) est disposée dans le bain de liquide (1) au-dessus de la surface de sortie (13) du tuyau d'évacuation (10) et en-dessous de la surface (9) du bain de liquide (1) avec une faible inclinaison par rapport à la surface (9) dudit bain de liquide (1).

7. Dispositif de chargement selon une des revendications 3 à 5, dans lequel un injecteur (19) qui travaille avec une injection d'eau est monté dans le coude (12) dans la direction d'une évacuation de produits légers.

8. Procédé de chargement de chips en matière plastique dans un bain de liquide (1) d'un dispositif de séparation et de lavage d'une installation de recyclage de matières plastiques, caractérisé par le fait que les chips de matière plastique (5) sont introduits dans un cyclone (2), dans la direction de l'axe principal (4) de celui-ci, à l'intérieur du cyclone (2) sont exposés à un flux de liquide émis dans ledit cyclone (2) dans la direction tangentielle de celui-ci et sont transportés avec le flux de liquide en-dessous de la surface (9) du bain de liquide (1).

9. Procédé de chargement selon la revendication 8, dans lequel l'écoulement de liquide/chips de matière plastique à la sortie du cyclone (2) ou d'un tuyau d'évacuation (10) connecté au cyclone (2) est dirigé en biais vers le bas en formant un angle aigu avec un plan parallèle à la surface (9) du bain de liquide (1).

10. Procédé de chargement selon la revendication 8 ou 9, dans lequel l'écoulement de liquide/chips de matière plastique (14) à la sortie du cyclone (2) ou d'un tuyau d'évacuation (10) connecté au cyclone (2) est émis en direction d'une évacuation de produits légers du bain de liquide (1).

11. Procédé de chargement selon une des revendications 8 à 10, dans lequel la remontée des chips de matière plastique à l'intérieur du bain de liquide (1) est empêchée par une plaque (17) disposée suivant un angle aigu par rapport à la surface (9) du bain de liquide (1), entre la surface (9) du bain de liquide (1) et la sortie du cyclone (2) ou le tube de sortie (10) connecté au cyclone (2).
